# FASCICULE DE BREVET EUROPEEN

(11) **EP 2 752 855 B1**
(45) Date de publication et mention de la délivrance du brevet: **15.11.2017**
(21) Numéro de dépôt: 14150148.6
(22) Date de dépôt: 03.01.2014
(51) Int. Cl.: H01B 3/44, C08L 23/08

(54) **Câble électrique comprenant une couche polymérique facilement pelable**
Elektrokabel mit einem leicht entfernbaren Polymermantel
Electric cable including an easily peelable polymer layer

(30) Priorité: 07.01.2013 FR 1350089
(43) Date de publication de la demande: 09.07.2014
(73) Titulaire: Nexans, 92400 Courbevoie (FR)
(72) Inventeur: Koelblin, Christian, 01800 Meximieux (FR); Mercado, Christophe, 01240 CERTINES (FR)
(74) Mandataire: Peguet, Wilfried

(56) Documents cités:
- WO-A1-02/31051
- WO-A2-2011/109243
- US-A- 6 133 367
- US-A1- 2006 246 286

## Description

La présente invention se rapporte à un câble électrique comprenant une couche polymérique facilement pelable.

Elle s'applique typiquement, mais non exclusivement, aux domaines des câbles d'énergie à moyenne tension (notamment de 6 à 45-60 kV) ou à haute tension (notamment supérieur à 60 kV, et pouvant aller jusqu'à 800 kV), qu'ils soient à courant continu ou alternatif.

Du document EP-0 420 271 est connu un câble électrique comportant une couche semi-conductrice réticulée, facilement pelable, obtenue à partir d'une composition comprenant un copolymère d'éthylène et d'acétate de vinyle, un copolymère butadiène-acrylonitrile (aussi appelé « caoutchouc nitrile », mieux connu sous l'anglicisme « *Nitrile Butadiene Rubber (NBR)* »), du noir de carbone, et un agent de réticulation du type peroxyde organique.

Toutefois, même si la couche réticulée obtenue à partir de cette composition, est facilement pelable, elle ne présente pas de très bonnes propriétés de résistance au vieillissement thermique.

Le but de la présente invention est de pallier les inconvénients des techniques de l'art antérieur en proposant un câble électrique comprenant au moins une couche polymérique présentant une résistance améliorée au vieillissement thermique, tout en garantissant une très bonne pelabilité.

La présente invention a pour objet un câble électrique comprenant au moins un élément électriquement conducteur allongé, entouré par au moins une couche polymérique, caractérisé en ce que la couche polymérique est obtenue à partir d'une composition comprenant un mélange de copolymères d'éthylène et d'acétate de vinyle (EVA), ledit mélange d'EVA comprenant :
- un premier copolymère d'éthylène et d'acétate de vinyle (EVA1) avec un indice de fluidité IF1 (en gramme/10 minutes, selon la norme ISO 1133 à 190°C/2,16 kg), et
- un deuxième copolymère d'éthylène et d'acétate de vinyle (EVA2) avec un indice de fluidité IF2 (en gramme/10 minutes selon la norme ISO 1133 à 190°C/2,16 kg),
avec IF2 ≥ IF1 + 15 et IF2 ≥ 40,0. de préférence IF2 ≥ IF1 + 20, de préférence IF2 ≥ IF1 + 30, et de façon particulièrement préférée IF2 ≥ IF1 + 50.

La température (i.e. 190°C) et le poids (i.e. 2,16 kg) mentionnés selon la norme ISO 1133 font respectivement références à la température du fourreau et de la filière de l'appareil de mesure, et à la masse totale du piston avec charge qui appuie sur la matière à mesurer pour la pousser à travers la filière dudit appareil.

Grâce à l'invention, la couche polymérique est facilement pelable et présente en outre de très bonnes propriétés de résistance au vieillissement thermique, notamment face au stress thermique lié à la production d'un câble tel que par exemple lors de la mise en oeuvre, de l'extrusion et/ou de la réticulation de la couche polymérique du câble.

Dans la présente invention, le premier copolymère d'éthylène et d'acétate de vinyle (EVA1) et le deuxième copolymère d'éthylène et d'acétate de vinyle (EVA2) sont de préférence des polymères issus de la copolymérisation uniquement de deux types de monomère différents (i.e. monomère d'éthylène et monomère d'acétate de vinyle). En d'autres termes, EVA1 et EVA2 ne sont pas des terpolymères. Plus particulièrement, EVA1 et EVA2 ne sont pas des terpolymères d'éthylène, d'acétate de vinyle et de monoxyde de carbone.

Dans un exemple de réalisation, IF1 ≥ 1,0 et/ou IF2 ≥ 40,0. De préférence, 1,0 ≤ IF1 ≤ 10,0 et/ou 40,0 ≤ IF2 ≤ 70,0.

Dans un mode de réalisation particulier, la composition de l'invention peut comprendre au moins 15% en poids du mélange de copolymères d'éthylène et d'acétate de vinyle, de préférence au moins 20% en poids du mélange de copolymères d'éthylène et d'acétate de vinyle (EVA), de préférence au moins 30% en poids du mélange de copolymères d'éthylène et d'acétate de vinyle (EVA), de préférence au moins 40% en poids du mélange de copolymères d'éthylène et d'acétate de vinyle (EVA), et de façon particulièrement préférée au moins 45% en poids du mélange de copolymères d'éthylène et d'acétate de vinyle (EVA).

Dans un autre mode de réalisation particulier, la composition de l'invention peut comprendre au moins 10% en poids d'EVA1 et au moins 10% en poids d'EVA2, de préférence au moins 15% en poids d'EVA1 et au moins 15% en poids d'EVA2, et de façon particulièrement préférée au moins 20% en poids d'EVA1 et au moins 20% en poids d'EVA2.

EVA1 et EVA2 peuvent avoir des quantités identiques ou différentes de groupements acétate de vinyle (VA).

Plus particulièrement, EVA1 peut comprendre au moins 27% en poids de groupements acétate de vinyle, de préférence au moins 30% en poids de groupements acétate de vinyle, et de façon particulièrement préférée au moins 35% en poids de groupements acétate de vinyle.

EVA2 peut comprendre au moins 27% en poids de groupements acétate de vinyle, de préférence au moins 30% en poids de groupements acétate de vinyle, et de façon particulièrement préférée au moins 35% en poids de groupements acétate de vinyle.

La limite minimum de 27% en poids de groupements acétate de vinyle concernant EVA1 et/ou EVA2 permet avantageusement d'optimiser les propriétés de pelabilité de la couche polymérique de l'invention.

En outre, il peut être avantageux que EVA1 et/ou EVA2 comprennent au plus 45% en poids de groupements acétate de vinyle, afin d'optimiser la mise en oeuvre de la composition de l'invention, notamment par extrusion.

Dans un mode de réalisation particulier, le mélange de copolymères d'éthylène et d'acétate de vinyle peut comprendre au moins 30% en poids de EVA1, et de préférence le mélange de copolymères d'éthylène et d'acétate de vinyle peut comprendre de 40 à 60% en poids de EVA1.

Dans un mode de réalisation particulier, le mélange de copolymères d'éthylène et d'acétate de vinyle peut comprendre au moins 30% en poids de EVA2, et de préférence le mélange de copolymères d'éthylène et d'acétate de vinyle peut comprendre de 40 à 60% en poids de EVA2.

Le mélange de copolymères d'éthylène et d'acétate de vinyle de l'invention peut comprendre de façon préférée uniquement EVA1 et EVA2.

Plus particulièrement, la composition de l'invention peut comprendre uniquement des copolymères d'éthylène et d'acétate de vinyle, en tant que polymères dans la composition.

La couche polymérique de l'invention peut être avantageusement une couche réticulée. Ainsi, la couche réticulée permet d'avoir des propriétés mécaniques améliorées, et de ce fait, la température maximale de fonctionnement du câble s'en trouvera augmentée.

Dans ce cas, la composition peut être réticulée par des techniques bien connues de l'homme du métier, telle que la réticulation par voie peroxyde, la réticulation silane, ou la réticulation par irradiation notamment par faisceau d'électron (rayonnement béta).

Lorsque la réticulation est effectuée par voie peroxyde, la composition peut comprendre en outre un agent de réticulation du type peroxyde organique, dans des proportions bien connues de l'homme du métier.

A titre d'exemple, la composition de l'invention peut comprendre entre 0,5 et 2,0 parties en poids de peroxyde organique du type tert-Butylcumyl peroxyde ou du type dicumyl peroxyde, pour 100 parties en poids de copolymères d'éthylène et d'acétate de vinyle.

Typiquement, une fois la composition de l'invention mise en oeuvre autour de l'élément électriquement conducteur allongé, notamment par extrusion, la réticulation peroxyde peut s'effectuer dans un tube vapeur ou un tube azote de vulcanisation, à une température pouvant être comprise entre 250 et 400 °C.

La composition selon l'invention peut comprendre en outre un agent anti-mottant, limitant le caractère collant de la couche polymérique de l'invention.

L'agent anti-mottant peut être préférentiellement un acide d'amide gras.

A titre d'exemple, on peut citer le stéaryl érucamide, l'éthylène bisoléamide ou l'éthylène-bis-stéaramide.

La composition peut typiquement comprendre de 0,5 % à 5% en poids d'agent anti-mottant.

La composition selon l'invention peut comprendre en outre un agent de viscosité. Cet agent de viscosité permet d'ajuster la viscosité de la composition afin de faciliter sa mise en oeuvre, notamment lorsque ladite composition est extrudée à l'aide d'une extrudeuse.

A titre d'exemple, cet agent de viscosité peut être une cire apolaire du type cire paraffine, cire microcristalline ou cire polyéthylène de basse densité.

La composition peut typiquement comprendre de 0,5% à 10% en poids d'agent de viscosité.

La composition selon l'invention peut comprendre en outre un capteur d'acide, pour capter notamment l'acide acétique produit par la dégradation des copolymères d'éthylène et d'acétate de vinyle lors de l'étape de vulcanisation. En effet, notamment à partir d'environ 200°C, il peut exister une scission des groupements acétate de vinyle des copolymères d'éthylène et d'acétate de vinyle, ces groupements formant ainsi en présence d'humidité de l'acide acétique.

A titre d'exemple, le capteur d'acide peut être choisi parmi la craie, le kaolin, l'hydroxyde de magnésium (Mg(OH)₂), l'hydroxyde d'aluminium (Al(OH)₃), l'oxyde de zinc (ZnO), les hydrotalcites, le stéarate de zinc et le stéarate de calcium

La composition peut typiquement comprendre de 3% à 20% en poids de capteur d'acide.

La composition selon l'invention peut comprendre en outre au moins un agent de protection tel qu'un antioxydant. Les antioxydants permettent de protéger la composition du stress thermique engendré lors des étapes de fabrication du câble ou de fonctionnement du câble.

Les antioxydants sont choisis de préférence parmi :
- les antioxydants phénoliques à encombrement stérique tels que le tetrakisméthylene(3,5-di-*t*-butyl-4-hydroxy-hydrocinnamate) méthane, le octadecyl 3-(3,5-di-*t*-butyl-4-hydroxyphényle)propionate, le 2,2'-thiodiéthylène bis[3-(3,5-di-*t*-butyl-4-hydroxyphényle) propionate], le 2,2'-Thiobis(6-*t*-butyle-4-méthylephénol), le 2,2'-méthylenebis(6-*t*-butyle-4-méthylphénol), le 1,2-Bis(3,5-di-*t*-butyle-4-hydroxyhydrocinnamoyl) hydrazine, le [2,2'-oxamido-bis(éthyl 3(3,5-di-*t*-butyle-4-hydroxyphényle) propionate), et le 2,2'-oxamido-bis[éthyle 3-(*t*-butyl-4-hydroxyphényle) propionate] ;
- les thioéthers tels que le 4,6-bis(octylthiométhyle)-o-crésol, le Bis[2-méthyle-4-{3-n-alkyle (C12 ou C14)thiopropionyloxy}-5-*t-*butylphényle]sulfide et le Thiobis-[2-*t*-butyl-5-méthyle-4,1-phénylène] bis [3-(dodecyltio)propionate] ;

- les antioxydants à base de soufre tels que le Dioctadecyl-3,3'-thiodipropionate ou le Didodecyl-3,3'-thiodipropionate ;
- les antioxydants à base de phosphore tels que les phosphites ou phosphonates comme par exemple le Tris(2,4-di-*t*-butyl-phényle)phosphite ou le Bis(2,4-di-*t*-butylphényle) pentaerythritol diphosphite ; et
- les antioxydants de type amine tels que les phénylène diamines (IPPD, 6PPD....), les diphénylam ine styrène, les diphénylam ines, les mercapto benzimidazoles et le 2,2,4-trimethyl-1,2 dihydroquinoline polymérisé (TMQ), ce dernier type d'antioxydant étant particulièrement préféré dans la composition de l'invention.

Les TMQ peuvent avoir différents grades, à savoir :
- un grade dit « standard » avec un faible degré de polymérisation, c'est-à-dire avec un taux de monomère résiduel supérieur à 1% en poids et ayant une teneur en NaCl résiduelle pouvant aller de 100 ppm à plus de 800 ppm (parties par million massiques) ;
- un grade dit « à haut degré de polymérisation » avec un haut degré de polymérisation, c'est-à-dire avec un taux de monomère résiduel inférieur à 1% en poids et ayant une teneur en NaCl résiduelle pouvant aller de 100 ppm à plus de 800 ppm ;
- un grade dit « à faible teneur en sel résiduel » avec une teneur en NaCl résiduelle inférieure à 100 ppm.

Le type de stabilisant et son taux dans la composition de l'invention sont classiquement choisis en fonction de la température maximale subie par les polymères pendant la production du mélange et pendant la mise en oeuvre par extrusion sur le câble ainsi que selon la durée maximale d'exposition à cette température.

La composition peut typiquement comprendre de 0,1% à 2% en poids d'antioxydant(s). De préférence, elle peut comprendre au plus 1,0% en poids d'antioxydant(s) notamment lorsque l'antioxydant est le TMQ.

D'autres additifs et/ou d'autres charges bien connus de l'homme du métier peuvent également être ajoutés à la composition de l'invention tels que des retardateurs de grillage ; des agents favorisant la mise en oeuvre tels que des lubrifiants; des agents compatibilisants; des agents de couplage ; des stabilisants UV ; des charges non-conductrices ; des charges électriquement conductrices ; et/ou des charges minérales sans halogènes destinées à améliorer le comportement au feu de la composition.

Afin de garantir un câble électrique dit « HFFR » pour l'anglicisme « *Halogen Free Flame Retardant* »*,* le câble de l'invention ne comprend préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

La couche polymérique de l'invention est de préférence une couche extrudée par des techniques bien connues de l'homme du métier. A ce titre, et afin d'optimiser l'extrusion de la composition de l'invention, cette dernière peut avoir un indice de fluidité (IFc) (en gramme/10 minutes selon la norme ISO 1133 à 120°C/21,6 kg) défini tel que 2,5 ≤ IFc ≤ 10,0.

Dans un mode de réalisation préféré, la couche polymérique de l'invention est une couche dite « pelable », afin d'avoir notamment facilement accès aux couches sous-jacentes ou à l'élément électriquement conducteur allongé. A ce titre, la couche polymérique de la présente invention peut avoir une force de pelabilité comprise entre 5 et 20 Newton (N) (selon la méthode de mesure définie dans la norme NF C 33-226 annexe D).

L'élément électriquement conducteur allongé de l'invention peut être un ou plusieurs conducteurs électriques du type monobrin ou multibrins. De préférence, ledit élément électriquement conducteur allongé est en cuivre, en alliage de cuivre, en aluminium, ou en alliage d'aluminium.

Plus particulièrement, le câble de l'invention est un câble électrique de type câble d'énergie. Dans ce cas, le câble de l'invention peut comprendre un élément électriquement conducteur allongé, entouré par une première couche semi-conductrice, la première couche semi-conductrice étant entourée par une couche électriquement isolante, et la couche électriquement isolante étant entourée par une deuxième couche semi-conductrice, caractérisé en ce qu'au moins une desdites trois couches est une couche polymérique telle que définie dans la présente invention.

Dans un mode de réalisation particulier, généralement conforme au câble électrique de type câble d'énergie de l'invention, la première couche semi-conductrice, la couche électriquement isolante et la deuxième couche semi-conductrice constituent une isolation tricouche. En d'autres termes, la couche électriquement isolante est directement en contact physique avec la première couche semi-conductrice, et la deuxième couche semi-conductrice est directement en contact physique avec la couche électriquement isolante.

Dans le câble électrique du type câble d'énergie de l'invention, au moins la deuxième couche semi-conductrice peut être est une couche polymérique telle que définie dans la présente invention.

De préférence, au moins la première et la deuxième couches semi-conductrices sont des couches polymériques telles que définies dans la présente invention.

Lorsque la composition de l'invention est utilisée pour la fabrication de couches semi-conductrices (e.g. première couche semi-conductrice et/ou deuxième couche semi-conductrice), la composition comprend en outre au moins une charge électriquement conductrice en une quantité suffisante pour rendre la composition semi-conductrice.

On considère plus particulièrement qu'une couche est semi-conductrice lorsque sa conductivité électrique est d'au moins 0,001 S.m⁻¹ (siemens par mètre).

La composition utilisée pour obtenir une couche semi-conductrice peut comprendre de 4 à 40% en poids de charge électriquement conductrice, de préférence au moins 15% en poids de charge électriquement conductrice, et encore plus préférentiellement au moins 25% en poids de charge électriquement conductrice.

La charge électriquement conductrice peut être choisie avantageusement parmi les noirs de carbone, et les graphites, ou un de leurs mélanges.

Le câble électrique de l'invention peut comprendre en outre un écran métallique entourant la deuxième couche semi-conductrice.

Cet écran métallique peut être un écran dit « filaire », composé d'un ensemble de conducteurs en cuivre ou aluminium arrangé autour et le long de la deuxième couche semi-conductrice, un écran dit « rubané » composé d'un ou de plusieurs rubans métalliques conducteurs posé(s) en hélice autour de la deuxième couche semi-conductrice, ou d'un écran dit « étanche » de type tube métallique entourant la deuxième couche semi-conductrice. Ce dernier type d'écran permet notamment de faire barrière à l'humidité ayant tendance à pénétrer le câble électrique en direction radiale.

Tous les types d'écran métallique peuvent jouer le rôle de mise à la terre du câble électrique et peuvent ainsi transporter des courants de défaut, par exemple en cas de court-circuit dans le réseau concerné.

En outre, le câble électrique de l'invention peut comprendre une gaine extérieure de protection entourant la deuxième couche semi-conductrice, ou bien entourant plus particulièrement ledit écran métallique lorsqu'il existe. Cette gaine extérieure de protection peut être réalisée classiquement à partir de matériaux thermoplastiques appropriés tels que des HDPE, des MDPE ou des LLDPE ; ou encore des matériaux retardant la propagation de la flamme ou résistant à la propagation de la flamme. Notamment, si ces derniers matériaux ne contiennent pas d'halogène, on parle de gainage de type HFFR (pour l'anglicisme « *Halogen Free Flame Retardant* »)*.*

D'autres couches, telles que des couches gonflantes en présence d'humidité, peuvent être ajoutées entre la deuxième couche semi-conductrice et l'écran métallique lorsqu'il existe, et/ou entre l'écran métallique et la gaine extérieure lorsqu'ils existent, ces couches permettant d'assurer l'étanchéité longitudinale du câble électrique à l'eau. Le conducteur électrique du câble de l'invention peut également comprendre des matières gonflantes en présence d'humidité pour obtenir une « âme étanche ».

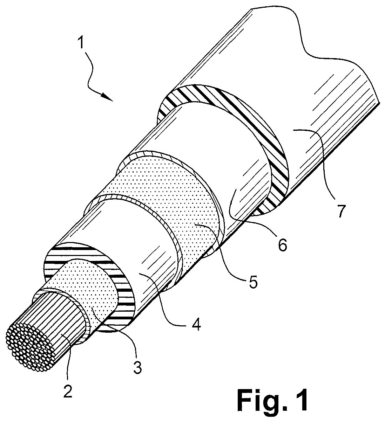

D'autres caractéristiques et avantages de la présente invention apparaîtront à la lumière de la description d'un exemple non limitatif d'un câble électrique selon l'invention fait en référence à la figure 1 représentant une vue schématique en perspective et en coupe d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un élément électriquement conducteur 2 central allongé, notamment en cuivre ou en aluminium, et, successivement et coaxialement comprend autour de cet élément 2, une première couche semi-conductrice 3 dite « couche semi-conductrice interne », une couche électriquement isolante 4, une deuxième couche semi-conductrice 5 dite « couche semi-conductrice externe », un écran métallique 6 du type tube cylindrique, et une gaine extérieure de protection 7.

Au moins l'une des couches 3, 4 et/ou 5 peut être obtenue à partir d'une composition selon l'invention. De préférence, la couche semi-conductrice externe est une couche obtenue à partir d'une composition selon l'invention.

Dans ce type de câbles, les couches polymériques 3, 4 et 5 sont typiquement des couches extrudées et réticulées.

La présence de l'écran métallique 6 et de la gaine extérieure de protection 7 est préférentielle, mais non essentielle, cette structure de câble étant en tant que telle bien connue de l'homme du métier.

### Exemples :

Afin de montrer les propriétés de l'invention, les compositions dans le tableau 1 ci-dessous ont été réalisées. Les compositions Ex. 1 à Ex. 4 correspondent à des compositions de l'invention, et la composition Ex. 5 est un exemple comparatif provenant de l'art antérieur.

**Tableau 1**

| **Compositions** | **Ex. 1** | **Ex. 2** | **Ex. 3** | **Ex. 4** | **Ex. 5 (Comp.)** |
|---|---|---|---|---|---|
| **EVA 28% VA, MFR 5-8g/10min (190°C/2,16kg)** | 0 | 0 | 0 | 0 | 41,2 |
| **EVA 40% VA, MFR 3g/10min (190°C/2,16kg)** | 21,28 | 31,92 | 23,1 | 25,6 | 0 |
| **EVA 40% VA, MFR 60g/10min (190°C/2,16kg)** | 31,92 | 21,28 | 23,1 | 25,6 | 0 |
| **Cire apolaire** | 0 | 0 | 0 | 0 | 4 |
| **Caoutchouc nitrile** | 0 | 0 | 0 | 0 | 16 |
| **Agent anti-mottant** | 1 | 1 | 3 | 3 | 1 |
| **Antioxydant** | 0,8 | 0,8 | 0,8 | 0,8 | 0,8 |
| **Capteur d'acide** | 12 | 12 | 15 | 9 | 0 |
| **Charge électriquement conductrice** | 33 | 33 | 35 | 36 | 37 |
| **Total (% en poids de la composition)** | **100** | **100** | **100** | **100** | **100** |
| **Peroxyde organique (% en poids ajouté à 100 parties en poids de la composition)** | 0,6 | 0,6 | 0,6 | 0,6 | 0,6 |

Les différents constituants du tableau 1 sont exprimés en pourcentage (%) en poids de la composition, excepté le peroxyde organique qui est exprimé en % en poids pour 100 parties en poids de la composition.

L'origine des constituants des compositions détaillées dans le tableau 1 est la suivante :
- EVA 28% VA MFR 5-8g/10min est un copolymère d'éthylène et d'acétate de vinyle comprenant 28% en poids de groupements acétate de vinyle (VA), avec un indice de fluidité de 5-8g/10 min (dans la présente invention, le sigle « MFR » signifie « Melt Flow Rate » et correspond à l'indice de fluidité), commercialisé par la société EXXON sous la référence Escorene Ultra UL 00728 ;
- EVA 40% VA MFR 3g/10min est un copolymère d'éthylène et d'acétate de vinyle comprenant 40% en poids de groupements acétate de vinyle (VA), avec un indice de fluidité de 3g/10 min, commercialisé par la société DUPONT, sous la référence Elvax 40L-03 ;
- EVA 40% VA MFR 60g/10min est un copolymère d'éthylène et d'acétate de vinyle comprenant 40% en poids de groupements acétate de vinyle (VA), avec un indice de fluidité de 60g/10 min, commercialisé par la société EXXON, sous la référence Escorene Ultra UL 005540 EH2 ;
- Cire apolaire est une cire commercialisée par la société SASOL, sous la référence EnHance ;
- Caoutchouc nitrile est un copolymère butadiène-acrylonitrile en poudre, comprenant 34% en poids de groupements acrylonitrile (ACN), commercialisé par la société LANXESS sous la référence Baymod N 34.82 ;
- Agent anti-mottant est un stearyl érucamide, commercialisé par la société AKZO, sous la référence Armid SEA;
- Antioxydant est un antioxydant de la famille des triméthyl quinoline (TMQ), commercialisé par la société SONGWON sous la référence Antioxidant FR SB ;
- Capteur d'acide est de la craie avec un traitement de surface, commercialisé par la société OMYA sous la référence EXH-1 SP ;
- Charge électriquement conductrice est du noir de carbone commercialisé par la société ORION ENGINEERED CARBONS, sous la référence Purex HS-45 ; et
- Peroxyde organique est du tert-butyl cumyl peroxyde, liquide à 25°C, commercialisé par la société Arkema, sous la référence Luperox 801.

A l'exception du peroxyde organique liquide, l'ensemble des constituants des différentes compositions du tableau 1 peut être mélangé dans un mélangeur en continu de type co-malaxeur BUSS, extrudeuse bi-vis ou un autre type de mélangeur approprié pour des mélanges caoutchouc ou des mélanges thermoplastiques chargés.

La préparation de pré-mélanges peut être également envisagée, pour faciliter le dosage des EVA dans le mélangeur, tel que par exemple un pré-mélange comprenant EVA 40% MFR 3g/10min, EVA 40% VA MFR 60g/10min, l'agent anti-mottant, et l'antioxydant. Bien entendu, le reste des constituants, tels que le capteur d'acide et la charge électriquement conductrice, seront alors ajoutées audit pré-mélange, dans le mélangeur en continu.

Classiquement, dans le mélangeur en continu, les matières polymères sont mises en fusion, les autres constituants du mélanges sont introduits et dispersés dans la matrice polymérique fondue, et le mélange homogénéisé.

Le mélange est ensuite extrudé sous forme de joncs. Les joncs sont ensuite refroidis et séchés pour être mis sous forme de granulés. Ces granulés sont alors imprégnés du peroxyde organique liquide.

Ces granulés imprégnés sont :
- soit introduits au sein d'une extrudeuse mono-vis afin d'extruder, à une température de 120°C, inférieure à la température de décomposition du peroxyde organique, une bande fine (non réticulée), pour contrôler l'état de surface et pour procéder à des tests mécaniques,
- soit utilisés pour mesurer l'indice de fluidité du mélange fini,
- soit disposés dans des moules appropriés pour pouvoir former par compression et par traitement thermique des plaque réticulées.

Pour former ces plaques réticulées, on utilise une presse automatique de laboratoire avec des moules ayant une empreinte avec les dimensions 200*200*2 mm. Typiquement, un cycle de moulage se compose des étapes suivantes :
- les granulés sont disposés dans le moule muni de films anti-adhérents en téflon,
- le moule est fermé de son couvercle, et est placé sur la presse préchauffée à 120°C pour une mise en température,
- quand le moule est à 120°C, la presse est mise sous pression (200 bar),
- le moule est chauffé à 190°C, afin de permettre la réticulation,
- le moule est refroidi et les plaques réticulées sont démoulées.

Les bandes (non réticulées), les granulés (non réticulés) et/ou les plaques moulées sont soumises à plusieurs tests afin de déterminer les propriétés suivantes :
- l'indice de fluidité de la composition du tableau 1, selon la norme ISO 1133, pour 120°C/21,6kg (la température (i.e. 120°C) et le poids (i.e. 21,6 kg) mentionnés selon la norme ISO 1133 font respectivement références à la température du fourreau et de la filière de l'appareil de mesure, et à la masse totale du piston avec charge qui appuie sur la matière à mesurer pour la pousser à travers la filière dudit appareil) ;
- la résistance à la rupture en méga Pascal (MPa), dont les valeurs limites à respecter sur câble réel sont décrites dans les normes NF C 33-226 et CEI 60502-2, et qui est mesurée selon la norme CEI 60811-1-1 en utilisant des éprouvettes conformes à la norme ISO 37-2 et en utilisant une vitesse de traction de 100 mm/min ;
- l'allongement à la rupture en pourcentage (%), dont les valeurs limites à respecter sur câble réel sont décrites dans les normes NF C 33-226 et CEI 60502-2, et qui est mesuré selon la norme CEI 60811-1-1 en utilisant des éprouvettes conformes à la norme ISO 37-2 et en utilisant une vitesse de traction de 100 mm/min ; et
- l'allongement à la rupture en pourcentage (%) après vieillissement en étuve 14 jours à 135°C, en %, dont les valeurs limites à respecter sur câble réel sont décrites dans les normes NF C 33-226 et CEI 60502-2, et qui est mesuré selon la norme CEI 60811-1-1 en utilisant des éprouvettes conformes à la norme ISO 37-2 et en utilisant une vitesse de traction de 100 mm/min.

Les résultats de ces tests sont rassemblés dans le tableau 2 ci-dessous.

**Tableau 2**

| **Propriétés** | Ex. 1 | Ex. 2 | Ex. 3 | Ex. 4 | Ex. 5 (Comp.) |
|---|---|---|---|---|---|
| Indice de fluidité : 120°C/21,6 kg ISO 1133, mesuré sur les granulés (non réticulés) | 9,96 | 5,94 | 4,21 | 6,35 | 3,67 |
| Résistance à la rupture mesurée sur bande extrudée (non réticulée) épaisseur 300 µm (vitesse de traction 100 mm/min.), en MPa | 12,6 | 14,2 | 10,4 | 11,8 | 14,6 |
| Allongement à la rupture mesurée sur bande extrudée (non réticulée) épaisseur 300 µm (vitesse de traction 100 mm/min.), en % | 420 | 395 | 332 | 432 | 417 |
| Résistance à la rupture mesurée sur plaque moulée réticulée, épaisseur 1,5 à 2 mm (vitesse de traction 100 mm/min.), en MPa | 14,77 | 15,18 | 12,38 | 13,48 | 16,84 |
| Allongement à la rupture mesurée sur plaque moulée réticulée, épaisseur 1,5 à 2 mm (vitesse de traction 100 mm/min.), en % | 366 | 338 | 297 | 360 | 269 |
| Allongement à la rupture mesurée sur plaque moulée réticulée, épaisseur 1,5 à 2 mm (vitesse de traction 100 mm/min.) après vieillissement en étuve 14 jours/135°C, en % | 317 | 299 | 233 | 294 | 44 |
| Variation des valeurs de l'allongement à la rupture, en %, entre valeur initiale et valeur après 14 jours/135°C | -13 | -12 | -22 | -18 | -84 |

Au regard des résultats rassemblés dans le tableau 2, les compositions de l'invention Ex. 1 à Ex. 4 présentent une variation de l'allongement à la rupture bien meilleure que celle obtenue à partir de la composition de l'art antérieur (Ex. 5).

Par conséquent, pour des propriétés de pelabilité sensiblement identiques, la composition de l'invention présente de très bonnes propriétés de résistance au vieillissement thermique par rapport à la composition de l'art antérieur à base de caoutchouc nitrile.

## Revendications

1. Câble électrique (1) comprenant au moins un élément électriquement conducteur allongé (2), entouré par au moins une couche polymérique (5), **caractérisé en ce que** la couche polymérique (5) est obtenue à partir d'une composition comprenant un mélange de copolymères d'éthylène et d'acétate de vinyle (EVA), ledit mélange d'EVA comprenant :
- un premier copolymère d'éthylène et d'acétate de vinyle (EVA1) avec un indice de fluidité IF1 (en gramme/10 minutes selon la norme ISO 1133 à 190°C/2,16 kg), et
- un deuxième copolymère d'éthylène et d'acétate de vinyle (EVA2) avec un indice de fluidité IF2 (en gramme/10 minutes selon la norme ISO 1133 à 190°C/2,16 kg),
avec IF2 ≥ IF1 + 15 et IF2 ≥ 40,0.

2. Câble électrique selon la revendication 1, **caractérisé en ce que** IF2 ≥ IF1 + 20, de préférence IF2 ≥ IF1 + 30, et de façon particulièrement préférée IF2 ≥ IF1 + 50.

3. Câble électrique selon les revendications 1 ou 2, **caractérisé en ce que** la composition comprend au moins 15% en poids du mélange de copolymères d'éthylène et d'acétate de vinyle.

4. Câble électrique selon l'une quelconque des revendications précédentes, **caractérisé en ce que** la composition comprend au moins 10% en poids d'EVA1 et au moins 10% en poids d'EVA2.

5. Câble électrique selon l'une quelconque des revendications précédentes, **caractérisé en ce que** EVA1 comprend au moins 27% en poids de groupements acétate de vinyle.

6. Câble électrique selon l'une quelconque des revendications précédentes, **caractérisé en ce que** EVA2 comprend au moins 27% en poids de groupements acétate de vinyle.

7. Câble électrique selon l'une quelconque des revendications précédentes, **caractérisé en ce que** le mélange de copolymères d'éthylène et d'acétate de vinyle comprend au moins 30% en poids de EVA1.

8. Câble électrique selon la revendication 7, **caractérisé en ce que** le mélange de copolymères d'éthylène et d'acétate de vinyle comprend de 40 à 60% en poids de EVA1.

9. Câble électrique selon l'une quelconque des revendications précédentes, **caractérisé en ce que** le mélange de copolymères d'éthylène et d'acétate de vinyle comprend au moins 30% en poids de EVA2.

10. Câble électrique selon la revendication 9, **caractérisé en ce que** le mélange de copolymères d'éthylène et d'acétate de vinyle comprend de 40 à 60% en poids de EVA2.

11. Câble électrique selon l'une quelconque des revendications précédentes, **caractérisé en ce que** 1,0 ≤ IF1 ≤ 10,0.

12. Câble électrique selon l'une quelconque des revendications précédentes, **caractérisé en ce que** 40,0 ≤ IF2 ≤ 70,0.

13. Câble électrique selon l'une quelconque des revendications précédentes, **caractérisé en ce que** la couche polymérique est une couche réticulée.

14. Câble électrique selon l'une quelconque des revendications précédentes, **caractérisé en ce que** la composition comprend en outre un capteur d'acide.

15. Câble électrique selon l'une quelconque des revendications précédentes, **caractérisé en ce que** la composition comprend en outre une charge électriquement conductrice.

16. Câble électrique selon l'une quelconque des revendications précédentes, **caractérisé en ce que** la composition a un indice de fluidité (IFc) (en gramme/10 minutes selon la norme ISO 1133 à 120°C/21,6 kg) défini tel que 2,5 ≤ IFc ≤ 10,0.

17. Câble électrique selon l'une quelconque des revendications précédentes, **caractérisé en ce que** la couche polymérique a une force de pelabilité comprise entre 5 et 20 N.

18. Câble électrique (1) comprenant un élément électriquement conducteur allongé (2), entouré par une première couche semi-conductrice (3), la première couche semi-conductrice étant entourée par une couche électriquement isolante (4), et la couche électriquement isolante étant entourée par une deuxième couche semi-conductrice (5), **caractérisé en ce qu'**au moins une desdites trois couches est une couche polymérique telle que définie dans l'une quelconque des revendications précédentes.

## Patentansprüche

1. Elektrokabel (1), umfassend mindestens ein längliches elektrisch leitendes Element (2), das von mindestens einer Polymerschicht (5) umgeben ist, **dadurch gekennzeichnet, dass** die Polymerschicht (5) aus einer Zusammensetzung hergestellt ist, die ein Gemisch aus Ethylen-Vinylacetat-Copolymeren (EVA) umfasst, wobei das EVA-Gemisch umfasst:
- ein erstes Ethylen-Vinylacetat-Copolymer (EVA1) mit einem Schmelzindex IF1 (in Gramm/10 Minuten gemäß der Norm ISO 1133 bei 190 °C/2,16 kg), und
- ein zweites Ethylen-Vinylacetat-Copolymer (EVA2) mit einem Schmelzindex IF2 (in Gramm/10 Minuten gemäß der Norm ISO 1133 bei 190 °C/2,16 kg),
mit IF2 ≥ IF1 + 15 und IF2 ≥ 40,0.

2. Elektrokabel nach Anspruch 1, **dadurch gekennzeichnet, dass** IF2 ≥ IF1 + 20, vorzugsweise IF2 ≥ IF1 + 30 und besonders vorzugsweise IF2 ≥ IF1 + 50 ist.

3. Elektrokabel nach den Ansprüchen 1 oder 2, **dadurch gekennzeichnet, dass** die Zusammensetzung mindestens 15 Gew.-% des Ethylen-Vinylacetat-Copolymer-Gemischs umfasst.

4. Elektrokabel nach einem der vorangehenden Ansprüche, **dadurch gekennzeichnet, dass** die Zusammensetzung mindestens 10 Gew.-% EVA1 und mindestens 10 Gew.-% EVA2 umfasst.

5. Elektrokabel nach einem der vorangehenden Ansprüche, **dadurch gekennzeichnet, dass** EVA1 mindestens 27 Gew.-% Vinylacetatgruppen umfasst.

6. Elektrokabel nach einem der vorangehenden Ansprüche, **dadurch gekennzeichnet, dass** EVA2 mindestens 27 Gew.-% Vinylacetatgruppen umfasst.

7. Elektrokabel nach einem der vorangehenden Ansprüche, **dadurch gekennzeichnet, dass** das Ethylen-Vinylacetat-Copolymer-Gemisch mindestens 30 Gew.-% EVA1 umfasst.

8. Elektrokabel nach Anspruch 7, **dadurch gekennzeichnet, dass** das Ethylen-Vinylacetat-Copolymer-Gemisch 40 bis 60 Gew.-% EVA1 umfasst.

9. Elektrokabel nach einem der vorangehenden Ansprüche, **dadurch gekennzeichnet, dass** das Ethylen-Vinylacetat-Copolymer-Gemisch mindestens 30 Gew.-% EVA2 umfasst.

10. Elektrokabel nach Anspruch 9, **dadurch gekennzeichnet, dass** das Ethylen-Vinylacetat-Copolymer-Gemisch 40 bis 60 Gew.-% EVA2 umfasst.

11. Elektrokabel nach einem der vorangehenden Ansprüche, **dadurch gekennzeichnet, dass** 1,0 ≤ IF1 ≤ 10,0 ist.

12. Elektrokabel nach einem der vorangehenden Ansprüche, **dadurch gekennzeichnet, dass** 40,0 ≤ IF2 ≤ 70,0 ist.

13. Elektrokabel nach einem der vorangehenden Ansprüche, **dadurch gekennzeichnet, dass** die Polymerschicht eine vernetzte Schicht ist.

14. Elektrokabel nach einem der vorangehenden Ansprüche, **dadurch gekennzeichnet, dass** die Zusammensetzung ferner einen Säurefänger umfasst.

15. Elektrokabel nach einem der vorangehenden Ansprüche, **dadurch gekennzeichnet, dass** die Zusammensetzung ferner einen elektrisch leitenden Komplex umfasst.

16. Elektrokabel nach einem der vorangehenden Ansprüche, **dadurch gekennzeichnet, dass** die Zusammensetzung einen Schmelzindex (IFc) (in Gramm/10 Minuten gemäß der Norm ISO 1133 bei 120 °C/21,6 kg) hat, der als 2,5 ≤ IFc ≤ 10,0 definiert ist.

17. Elektrokabel nach einem der vorangehenden Ansprüche, **dadurch gekennzeichnet, dass** die Polymerschicht eine Spaltbarkeitskraft zwischen 5 und 20 N inklusive hat.

18. Elektrokabel (1), umfassend ein längliches elektrisch leitendes Element (2), umgeben von einer ersten halbleitenden Schicht (3), wobei die erste halbleitende Schicht von einer elektrisch isolierenden Schicht (4) umgeben ist, und die elektrisch isolierende Schicht von einer zweiten halbleitenden Schicht (5) umgeben ist, **dadurch gekennzeichnet, dass** mindestens eine der drei Schichten eine Polymerschicht nach einem der vorangehenden Ansprüche ist.

## Claims

1. Electric cable (1) comprising at least one elongate electrically conductive element (2) surrounded by at least one polymeric layer (5), **characterized in that** the polymeric layer (5) is obtained from a composition comprising a mixture of ethylene and vinyl acetate (EVA) copolymers, said EVA mixture comprising:
- a first ethylene and vinyl acetate copolymer (EVA1) having a melt flow rate MFR1 (in grams/10 minutes as per standard ISO 1133 at 190°C/2.16 kg), and
- a second ethylene and vinyl acetate copolymer (EVA2) having a Melt Flow Rate MFR2 (in grams/10 minutes as per standard ISO 1133 at 190°C/2.16 kg),
where MFR2 ≥ MFR1 + 15 and MFR2 ≥ 40.0.

2. The electric cable according to claim 1, **characterized in that** MFR2 ≥ MFR1 + 20, preferably MFR2 ≥ MFR1 + 30, and further preferably MFR2 ≥ MFR1 + 50.

3. The electric able according to claims 1 or 2, **characterized in that** the composition comprises at least 15 % by weight of the mixture of ethylene and vinyl acetate copolymers.

4. The electric cable according to any of the preceding claims, **characterized in that** the composition comprises at least 10 % by weight of EVA1 and at least 10 % by weight of EVA2.

5. The electric cable according to any of the preceding claims, **characterized in that** EVA1 comprises at least 27 % by weight of vinyl acetate groups.

6. The electric cable according to any of the preceding claims, **characterized in that** EVA2 comprises at least 27 % by weight of vinyl acetate groups

7. The electric cable according to any of the preceding claims, **characterized in that** the mixture of ethylene and vinyl acetate copolymers comprises at least 30 % by weight of EVA1.

8. The electric cable according to claim 7, **characterized in that** the mixture of ethylene and vinyl acetate copolymers comprises 40 to 60 % by weight of EVA1.

9. The electric cable according to any of the preceding claims, **characterized in that** the mixture of ethylene and vinyl acetate copolymers comprises at least 30 % by weight of EVA2.

10. The electric cable according to claim 9, **characterized in that** the mixture of ethylene and vinyl acetate copolymers comprises 40 to 60 % by weight of EVA2.

11. The electric cable according to any of the preceding claims, **characterized in that** 1.0 ≤ MFR1 ≤ 10.0.

12. The electric cable according to any of the preceding claims, **characterized in that** 40.0 ≤ MFR2 ≤ 70.0.

13. The electric cable according to any of the preceding claims, **characterized in that** the polymeric layer is a cross-linked layer.

14. The electric cable according to any of the preceding claims, **characterized in that** the composition further comprises an acid scavenger.

15. The electric cable according to any of the preceding claims, **characterized in that** the composition further comprises an electrically conductive filler.

16. The electric cable according to any of the preceding claims, **characterized in that** the composition has a melt flow rate (MFR) (in grams/10 minutes as per standard ISO 1133 at 120°C/21.6 kg defined such that 2.5 ≤ MFR ≤ 10.0.

17. The electric cable according to any of the preceding claims, **characterized in that** the polymeric layer has a peel strength of between 5 and 20 N.

18. Electric cable (1) comprising an elongate electrically conductive element (2), surrounded by a first semiconductor layer (3), the first semiconductor layer being surrounded by an electrically insulating layer (4), and the electrically insulating layer being surrounded by a second semiconductor layer (5), **characterized in that** at least one of said three layers is a polymeric layer such as defined in any of the preceding claims.
